(19) Europäisches Patentamt
European Patent Office
Office européen des brevets

(11) Veröffentlichungsnummer: **0 262 394 B1**

(12) **EUROPÄISCHE PATENTSCHRIFT**

(45) Veröffentlichungstag der Patentschrift: **25.09.91**

(51) Int. Cl.⁵: **C07F 9/42**

(21) Anmeldenummer: **87112378.2**

(22) Anmeldetag: **26.08.87**

# (54) Verfahren zur Herstellung von Vinylphosphonsäuredichlorid.

(30) Priorität: **30.08.86 DE 3629577**

(43) Veröffentlichungstag der Anmeldung:
**06.04.88 Patentblatt 88/14**

(45) Bekanntmachung des Hinweises auf die Patenterteilung:
**25.09.91 Patentblatt 91/39**

(84) Benannte Vertragsstaaten:
**BE CH DE FR GB IT LI NL**

(56) Entgegenhaltungen:
**EP-A- 0 241 115**
**FR-A- 1 549 019**

(73) Patentinhaber: **HOECHST AKTIENGESELLSCHAFT**
**Postfach 80 03 20**
**W-6230 Frankfurt am Main 80(DE)**

(72) Erfinder: **Siegel, Herbert, Dr.**
**Am alten Birnbaum 10a**
**W-6238 Hofheim am Taunus(DE)**
Erfinder: **Weiss, Erwin, Dr.**
**Vorderheide 1**
**W-6238 Hofheim am Taunus(DE)**
Erfinder: **Berger, Harald, Dr.**
**Johann-Strauss-Strasse 45**
**W-6233 Kelkheim (Taunus)(DE)**

**EP 0 262 394 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Vinylphosphonsäuredichlorid durch Abspaltung von Chlorwasserstoff aus 2-Chlorethanphosphonsäuredichlorid in Gegenwart eines Katalysators. Aus Vinylphosphonsäuredichlorid erhält man durch Hydrolyse Vinylphosphonsäure, die ein wichtiges Zwischenprodukt bei der Herstellung von Flammschutzmitteln und ein wichtiges Monomeres bei der Herstellung von Homo- und Mischpolymerisaten ist. Derartige Polymerisate sind in Lacken, Kunststoffen, Korrosionsinhibitoren und Beschichtungsmitteln von Bedeutung.

Die ältere, nicht vorveröffentlichte EP-A 241 115 beschreibt ein Verfahren zur Herstellung von ungesättigten Phosphonsäuredichloriden durch Abspaltung von Halogenwasserstoff aus Halogenalkanphosphonsäuredichloriden in Gegenwart von Triphenylphosphin, Dibenzylsulfid oder Lithiumiodid oder Mischungen davon mit Tetramethylammoniumchlorid, Benzyltriäthylammoniumchlorid oder Tetrabutylammoniumbromid als Katalysatoren.

Es ist aus DE-OS 1 568 945 bekannt, Vinylphosphonsäuredichlorid aus 2-Chlorethanphosphonsäuredichlorid in Gegenwart von Triphenylphosphin als Katalysator herzustellen.

Es wurde nun gefunden, daß man statt Triphenylphosphin auch andere tertiäre Phosphine, sowie quaternäre Ammonium- oder Phosphoniumsalze oder Alkali- oder Erdalkalihalogenide als Katalysatoren verwenden kann.

Ein Gegenstand der Erfindung ist daher ein Verfahren zur Herstellung von Vinylphosphonsäuredichlorid durch Abspaltung von Chlorwasserstoff aus 2-Chlorethanphosphonsäuredichlorid in Gegenwart eines Katalysators, dadurch gekennzeichnet, daß man die Umsetzung in Gegenwart eines Katalysators durchführt, der mindestens eine der folgenden Substanzen enthält:

a) tertiäre Phosphine der allgemeinen Formel

$$R^1-\overset{\displaystyle R^2}{\overset{|}{P}}-R^3,$$

worin die Reste $R^1$, $R^2$, $R^3$ gleich oder verschieden sein können und geradkettiges oder verzweigtes $C_1$-$C_{10}$-Alkyl, ggf. mit $C_1$-$C_4$-Alkoxy-, $C_1$-$C_4$-Alkylthio- oder $C_1$-$C_4$-Dialkylamino-Resten substituiert, bedeuten,

b) quaternäre Ammonium- oder Phosphoniumsalze der allgemeinen Formel

$$\left[ R^1 - \underset{\displaystyle R^4}{\underset{|}{\overset{\displaystyle R^2}{\overset{|}{Z}}}} - R^3 \right]^+ Y^- \quad \text{mit } Z = N \text{ oder } P$$

wobei $Y^-$ ein Anion einer starken Säure ist und worin $R^1$, $R^2$, $R^3$ zusätzlich zu der bei a) genannten Bedeutung mit Halogen-, $C_1$-$C_4$-Alkyl- oder $C_1$-$C_4$-Alkoxy-Resten substituiertes Phenyl bedeuten und $R^4$ geradkettiges oder verzweigtes $C_1$-$C_{10}$-Alkyl oder mit Halogen-, $C_1$-$C_4$-Alkyl- oder $C_1$-$C_4$-Alkoxy-Resten substituiertes Benzyl bedeutet,

c) Alkali- oder Erdalkalihalogenide, wobei die Umsetzung in Gegenwart von Lithiumiodid allein bei 100 - 165° C oder die Kombination Tetramethylammoniumchlorid/Triphenylphosphin bei 100 - 165° C oder
Tetramethylammoniumchlorid/Lithiumiodid bei 100 - 165° C oder
Tetramethylammoniumchlorid/Dibenzylsulfid bei 100 - 165° C oder
Lithiumiodid/Triphenylphosphin bei 150° C oder
Tetrabutylammoniumbromid/Dibenzylsulfid bei 140 - 150° C, jeweils bei vermindertem Druck, ausgeschlossen sein soll

und das entstandene Vinylphosphonsäuredichlorid gleichzeitig oder anschließend abdestilliert.

$R^1$, $R^2$, $R^3$ sind vorzugsweise $C_1$-$C_4$-Alkylreste (ggf. substituiert wie oben angegeben) oder im Falle der quaternären Ammonium- oder Phosphoniumsalze auch Phenylreste, die in der oben angegebenen Weise substituiert sind. $R^4$ ist vorzugsweise ein $C_1$-$C_4$-Alkylrest oder ein Benzylrest, der in der oben angegebenen Weise substituiert ist.

Die Reaktionstemperatur beträgt im allgemeinen 130 bis 220° C, vorzugsweise 140 bis 190° C. die Katalysatormenge beträgt 0,1 bis 10 Mol-%, vorzugsweise 0,5 bis 2 Mol-%, bezogen auf eingesetztes 2-Chloräthanphosphonsäuredichlorid.

Als Katalysator ist unter den tertiären Phosphinen Tri-n-butylphosphin besonders geeignet.

Als Anionen $Y^-$ einer starken Säure in der Formel für die quaternären Ammonium- oder Phosphoniumsalze kommen z.B. $Cl^-$, $Br^-$, $I^-$, $NO_3^-$, $SO_4^{=}$, $HSO_4^-$ und $PO_4^{\equiv}$ in Frage, d.h. das Symbol $Y^-$ soll auch für mehrwertige Anionen stehen.

Unter den quaternären Ammonium- und Phosphoniumsalzen sind als Katalysatoren vor allem solche geeignet, die bei der Phasentransferkatalyse verwendet werden, beispielsweise Tetrabutylammoniumbromid, Tetrabutylphosphoniumbromid, Tetrabutylammoniumhydrogensulfat, Methyltrioctylammoniumchlorid, Benzyltrimethylammoniumbromid, Benzyltriäthylammoniumchlorid. Besonders geeignet sind Tetrabutylammoniumbromid und Tetrabutylphosphoniumbromid.

Die folgenden Beispiele sollen die Erfindung erläutern:

Beispiel 1

153 g (0,84 Mol) 2-Chloräthanphosphonsäuredichlorid wurden in Gegenwart von 5,4 g (0,017 Mol) Tetrabutylammoniumbromid innerhalb einer Stunde auf 186 °C erhitzt. Anschließend wurde das Reaktionsgemisch eine Stunde bei 186 - 200 °C gehalten, wobei über eine Kolonne bei 167 - 168 °C Vinylphosphonsäuredichlorid in einer Menge von 106,5 g (0,73 Mol, 87 % der Theorie) in eine Vorlage überdestillierten.

Beispiel 2

Analog Beispiel 1 wurden 149,7 g (0,825 Mol) Chloräthanphosphonsäuredichlorid in Gegenwart von 5,3 g (0,016 Mol) Tetrabutylphosphoniumbromid innerhalb von 25 Minuten auf 186 °C erhitzt. Das Reaktionsgemisch wurde anschließend eine Stunde bei 186 - 200 °C gehalten, wobei über eine Kolonne 97,9 g (0,676 Mol, 82 % der Theorie) Vinylphosphonsäuredichlorid bei 165 - 166 °C überdestillierten.

Beispiel 3

Analog Beispiel 1 wurden 151,2 g (0,83 Mol) Chloräthanphosphonsäuredichlorid in Gegenwart von 1,5 g (0,017 Mol) Lithiumbromid innerhalb von 30 Minuten auf 190 °C erhitzt. Das Reaktionsgemisch wurde eine Stunde bei 190 - 210 °C gehalten, wobei über eine Kolonne 98,3 g (0,68 Mol, 82 % der Theorie) Vinylphosphonsäuredichlorid bei 166 - 167 °C überdestillierten.

## Patentansprüche

1. Verfahren zur Herstellung von Vinylphosphonsäuredichlorid durch Abspaltung von Chlorwasserstoff aus 2-Chloräthanphosphonsäuredichlorid in Gegenwart eines Katalysators, dadurch gekennzeichnet, daß man die Umsetzung in Gegenwart eines Katalysators durchführt, der mindestens eine der folgenden Substanzen enthält:

   a) tertiäre Phosphine der allgemeinen Formel

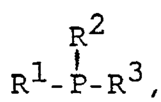

   worin die Reste $R^1$, $R^2$, $R^3$ gleich oder verschieden sein können und geradkettiges oder verzweigtes $C_1$-$C_{10}$-Alkyl, ggf. mit $C_1$-$C_4$-Alkoxy-, $C_1$-$C_4$-Alkylthio- oder $C_1$-$C_4$-Dialkylamino-Resten substituiert, bedeuten,

   b) quaternäre Ammonium- oder Phosphoniumsalze der allgemeinen Formel

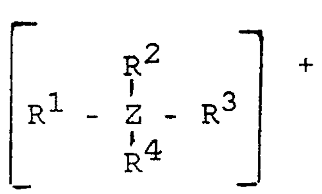

$Y^-$ mit Z = N oder P

wobei $Y^-$ ein Anion einer starken Säure ist und worin $R^1$, $R^2$, $R^3$ zusätzlich zu der bei a) genannten Bedeutung mit Halogen-, $C_1$-$C_4$-Alkyl- oder $C_1$-$C_4$-Alkoxy-Resten substituiertes Phenyl bedeuten und $R^4$ geradkettiges oder verzweigtes $C_1$-$C_{10}$-Alkyl oder mit Halogen-, $C_1$-$C_4$-Alkyl- oder $C_1$-$C_4$-Alkoxy-Resten substituiertes Benzyl bedeutet,

c) Alkali- oder Erdalkalihalogenide, wobei die Umsetzung in Gegenwart von Lithiumiodid allein bei 100 - 165 ° C oder die Kombination
Tetramethylammoniumchlorid/Triphenylphosphin bei 100 - 165 ° C oder
Tetramethylammoniumchlorid/Lithiumiodid bei 100 - 165 ° C oder
Tetramethylammoniumchlorid/Dibenzylsulfid bei 100 - 165 ° C oder
Lithiumiodid/Triphenylphosphin bei 150 ° C oder
Tetrabutylammoniumbromid/Dibenzylsulfid bei 140 - 150 ° C, jeweils bei vermindertem Druck, ausgeschlossen sein soll,

und das entstandene Vinylphosphonsäuredichlorid gleichzeitig oder anschließend abdestilliert.

**2.** Verfahren nach Anspruch 1, dadurch gekennzeichnet, daß man bei einer Temperatur von 130 bis 220 ° C arbeitet.

**3.** Verfahren nach Anspruch 1, dadurch gekennzeichnet, daß man bei einer Temperatur von 140 bis 190 ° C arbeitet.

**4.** Verfahren nach einem der Ansprüche 1 bis 3, dadurch gekennzeichnet, daß man als Katalysator Tetrabutylammoniumbromid, Tetrabutylphosphoniumbromid oder Lithiumbromid einsetzt.

## Claims

**1.** A process for the preparation of vinylphosphonic dichloride through elimination of hydrogen chloride from 2-chloroethanephosphonic dichloride in the presence of a catalyst, which comprises carrying out the reaction in the presence of a catalyst which contains at least one of the following substances:

a) tertiary phosphines of the formula

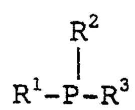

in which the radicals $R^1$, $R^2$ and $R^3$ may be identical or different and denote straight-chain or branched $C_1$-$C_{10}$-alkyl, optionally substituted by $C_1$-$C_4$-alkory, $C_1$-$C_4$-alkylthio or $C_1$-$C_4$-dialkylamino radicals,

b) quaternary ammonium or phosphonium salts of the formula

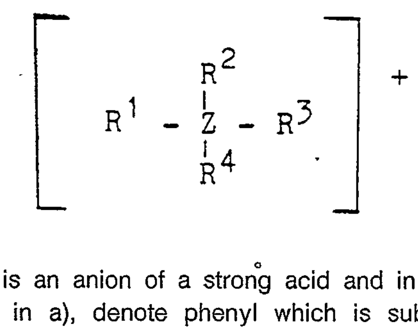

$Y^-$ where Z = N or P

where $Y^-$ is an anion of a strong acid and in which $R^1$, $R^2$ and $R^3$, in addition to the meaning mentioned in a), denote phenyl which is substituted by halogen, $C_1$-$C_4$-alkyl or $C_1$-$C_4$-alkoxy radicals,

and $R^4$ denotes straight-chain or branched $C_1$-$C_{10}$-alkyl, or benzyl which is substituted by halogen, $C_1$-$C_4$-alkyl or $C_1$-$C_4$-alkoxy radicals,

c) alkali or alkaline earth metal halides, where the reaction in the presence of lithium iodide alone at 100-165 ° C or the combination
tetramethylammcnium chloride/triphenylphosphine at 100-165 ° C or

tetramethylammonium chloride/lithium iodide at 100-165 °C or
tetramethylammonium chloride/dibenzyl sulfide at 100-165 °C or
lithium iodide/triphenylphosphine at 150 °C or tetrabutylammonium bromide/dibenzyl sulfide at 140-150 °C, in each case at reduced pressure, is to be excluded,
and simultaneously or subsequently removing the resultant vinylphosphonic dichloride by distillation.

**2.** The process as claimed in claim 1, wherein it is carried out at a temperature of 130 to 220 °C.

**3.** The process as claimed in claim 1, wherein it is carried out at a temperature of 140 to 190 °C.

**4.** The process as claimed in any one of claims 1 to 3, wherein the catalyst employed is tetrabutylammonium bromide, tetrabutylphosphonium bromide or lithium bromide.

**Revendications**

**1.** Procédé pour préparer le dichlorure de l'acide vinyl-phosphonique par enlèvement de chlorure d'hydrogène à partir du dichlorure de l'acide chloro-2 éthane-phosphonique, en présence d'un catalyseur, procédé caractérisé en ce qu'on effectue la réaction en présence d'un catalyseur qui contient au moins un composé pris dans l'un des ensembles suivants :

a) celui des phosphines tertiaires répondant à la formule générale :

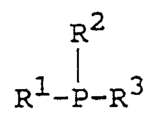

dans laquelle les radicaux $R^1$, $R^2$ et $R^3$ peuvent être identiques ou différents et représentent chacun un alkyle en $C_1$-$C_{10}$, linéaire ou ramifié, éventuellement porteur d'alcoxy en $C_1$-$C_4$, d'alkylthio en $C_1$-$C_4$ ou de di-($C_1$-$C_4$-alkyl)-amino,

b) celui des sels d'ammoniums ou de phosphoniums quaternaires répondant à la formule générale :

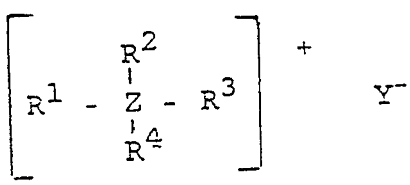

dans laquelle Z représente N ou P, le symbole $Y^-$ représente un anion d'un acide fort, $R^1$, $R^2$ et $R^3$ ont les significations qui leur ont été données sous a) et peuvent en outre représenter chacun un phényle porteur d'atomes d'halogènes, d'alkyles en $C_1$-$C_4$ ou d'alcoxy en $C_1$-$C_4$, et $R^4$ représente un alkyle en $C_1$-$C_{10}$, linéaire ou ramifié, ou un benzyle porteur d'atomes d'halogènes, d'alkyles en $C_1$-$C_4$ ou d'alcoxy en $C_1$-$C_4$, et

c) celui des halogénures de métaux alcalins et des halogénures de métaux alcalino-terreux,

à l'exclusion de la réaction effectuée :

- en présence d'iodure de lithium seul à 100-165 °C, ou
- en présence de l'association chlorure de tétraméthyl-ammonium/triphénylphosphine à 100-165 °C, ou
- en présence de l'association chlorure de tétraméthyl-ammonium/iodure de lithium à 100-165 °C, ou
- en présence, de l'association chlorure de tétraméthyl-ammonium/sulfure de dibenzyle à 100-165 °C, ou
- en présence de l'association iodure de lithium/triphénylphosphine à 150 °C, ou
- en présence de l'association bromure de tétrabutylammonium/sulfure de dibenzyle à 140-150 °C,

à chaque fois sous pression réduite,

et, en même temps ou par la suite, on sépare par distillation le dichlorure de l'acide vinyl-phosphonique formé.

**2.** Procédé selon la revendication 1 caractérisé en ce qu'on opère à une température de 130 à 220 °C.

**3.** Procédé selon la revendication 1 caractérisé en ce qu'on opère à une température de 140 à 190 °C.

**4.** Procédé selon l'une quelconque des revendications 1 à 3, caractérisé en ce qu'on utilise, comme catalyseur, le bromure de tétrabutylammonium, le bromure de tétrabutylphosphonium ou le bromure de lithium.